# EUROPÄISCHE PATENTSCHRIFT

(11) **EP 0 938 168 B1**
(45) Veröffentlichungstag und Bekanntmachung des Hinweises auf die Patenterteilung: **15.12.2004**
(21) Anmeldenummer: 99250024.9
(22) Anmeldetag: 22.01.1999
(51) Int. Cl.: H01R 25/14, H01R 25/16

(54) **Verbinder für zwei aufeinanderfolgende Schleifleitungsteilstücke**
Connector between two contact rail elements
Connecteur entre deux éléments de rails de contact

(30) Priorität: 19.02.1998 DE 19807792
(43) Veröffentlichungstag der Anmeldung: 25.08.1999
(73) Patentinhaber: Demag Cranes & Components GmbH, 58300 Wetter (DE)
(72) Erfinder: Kohlenberg, Thomas, Dipl.-Ing., 58300 Wetter (DE); Röhr, Michael, Dipl.-Ing., 44265 Dortmund (DE); Oemus, Klaus-Dieter, 58675 Hemer (DE); Schulte, Uwe, 58300 Wetter (DE)
(74) Vertreter: Moser, Jörg Michael, Dipl.-Ing.

(56) Entgegenhaltungen:
- EP-A- 0 409 807
- DE-A- 2 630 909
- DE-U- 29 620 614
- US-A- 5 336 100
- US-A- 5 594 212

## Beschreibung

Die Erfindung betrifft einen Verbinder für zwei aufeinanderfolgende Schleifleitungsteilstücke gemäß dem Anspruch 1.

Aus dem Prospekt der Firma Akapp "Multiconductor" ist es bekannt, Schleifleitungsteilstücke, die beispielsweise in vorkonfektionierten Längen hergestellt werden, durch Verbindungsmuffen miteinander zu verbinden. Die Schleifleitungsteilstücke bestehen dabei aus das Gehäuse bildenden Kunststofflängsprofilen mit darin eingezogenen Stromschienen. Die Anordnung der Schleifleitungsteilstücke innerhalb der Verbindungsmuffen erfolgt so, daß die Kunststofflängsprofile und die Stromschienen jeweils mit ihren Stirnflächen aneinander anliegen. Zum Ausgleich der Differenz der thermischen Ausdehnungskoeffizienten von Stromschiene und Kunststoffgehäuse werden in größeren Abständen sogenannte Expansionsverbindungsmuffen oder Dehnverbinder eingesetzt. Diese sind so ausgestaltet, daß die Kunststofflängsprofile in dem Dehnverbinder mit Abstand zueinander fluchtend angeordnet sind, wobei die dadurch gebildete Dehnungsfuge die über mehrere Schleifleitungsteilstücke aufsummierten Ausdehnungsunterschiede zwischen den Kunststofflängsprofilen bei Temperaturschwankungen auffängt.

Nachteilig ist, daß zusätzliche Dehnverbinder erforderlich sind und daß zum Überfahren der Dehnfuge die Stromabnehmerwagen speziell angepaßt sein müssen, d.h. eine größere Länge und/oder ein zusätzliches Radpaar aufweisen. Weiter sind zusätzliche Halterungen und Führungen für die Kunststofflängsprofile erforderlich.

Auch aus den Prospekten "Sicherheits-Schleifleitungen" und "Sicherheits-Schleifleitung - MKL" der Fa. Vahle sind Dehnungsteilstücke zum Ausgleich von unterschiedlichen Längenausdehnungen bekannt, die zusätzlich zu den Verbindungsmuffen, welche die vorkonfektionierten Teillängen miteinander verbinden, eingesetzt werden.

Nachteilig ist auch hier, daß bei der Konstruktion des Schleifleitungsteilstücks in definierten Abständen Dehnungsteilstücke vorgesehen sein müssen.

Ferner ist aus dem Prospekt "Kompakt-Kleinschleifleitung DKK" der Mannesmann Demag Fördertechnik AG ein Dehnverbinder für Schleifleitungsteilstücke bekannt. Die Schleifleitungsteilstücke bestehen dabei aus Kunststofflängsprofilen, in denen Stromschienen angeordnet und Stromabnehmerwagen verfahrbar sind. Die einander gegenüberliegenden Enden der Schleifleitungsteilstücke sind im Übergangsbereich geradlinig ausgebildet und mit Abstand zueinander fluchtend angeordnet. Weiter sind die Enden im Übergangsbereich jeweils mit einem Trichtervorsatz versehen, der den Übergang des Stromabnehmerwagens von einem Schleifleitungsteilstück auf die andere sicherstellt. Die einander spiegelsymmetrisch gegenüberliegenden Trichtervorsätze weisen ebenfalls einen Abstand von einigen Zentimetern zueinander auf, um eine temperaturbedingte Längenänderung der Kunststofflängsprofile aufzufangen. Der Abstand der Trichter ist so gewählt, daß außerdem eine problemlose Überfahrt zweier gekoppelter Stromabnehmerwagen sichergestellt ist. Die Trichter dienen hierbei auf der Einfahrseite zur Führung der gekoppelten Stromabnehmerwagen.

Nachteilig ist an dieser Art von Verbindern, daß die Stromschienen aus Sicherheitsgründen unterbrochen sein müssen und nur gekoppelte Stromabnehmerwagen die Dehnfuge passieren können.

Die DE-GM 67 53 186 zeigt einen als Verbindungsmuffe ausgebildeten Verbinder für zwei aufeinanderfolgende Schleifleitungsteilstücke, der aus zwei längsgeteilten Muffenhälften besteht. Genaugenommen ist die Verbindungsmuffe der Entgegenhaltung aus drei Gehäuseteilen gebildet. Eine derartige Verbindungsmuffe gestattet es nicht, die Schleifleitungsenden bereits mit einer Verbindungsmuffenhälfte vorzukonfektionieren, da - wie man sich leicht vorstellen kann - bei einer längsgeteilten Verbindungsmuffe die Vorkonfektionierung die Montage erheblich stören würde. Um trotz der Längsteilung eine Vorkonfektionierung vornehmen zu können, müßte jede Muffenhälfte soweit aus dem Montagebereich hinausschiebbar sein, daß eine Montage ohne Behinderung möglich ist.

Der Erfindung lag die Aufgabe zugrunde, einen Verbinder für zwei aufeinanderfolgende Schleifleitungsteilstücke zu schaffen, bei dem es trotz der unterschiedlichen thermischen Ausdehnungskoeffizienten von Metall und Kunststoff, insbesondere PVC, zu keinen Verwerfungen und Verformungen kommt und der einfach herzustellen ist sowie eine unkomplizierte Montage ermöglicht.

Die Lösung dieser Aufgabe ist erfindungsgemäß durch die im Anspruch 1 angegebene Merkmale gegeben. Durch die kennzeichnenden Merkmale der Unteransprüche 2 bis 9 ist der Verbinder in vorteilhafter Weise weiter ausgestaltet.

Die Erfindung geht davon aus, daß der Verbinder als Verbindungsmuffe ausgebildet ist, welche die in einem vorbestimmten Bereich in Längsrichtung frei verschiebbaren Enden der Kunststofflängsprofile formschlüssig umfaßt. Somit wird erreicht, daß die sicherheitstechnischen Forderungen erfüllt werden, indem die durchgehenden Stromschienen wie bei dem Schleifleitungsteilstück auch im Übergangsbereich von außen nicht zugänglich, sondern von dem Verbinder abgedeckt sind. Die freie Verschiebbarkeit der Kunststofflängsprofile in der Verbindungsmuffe und/oder der Verbindungsmuffe in Längsrichtung stellt hierbei sicher, daß auch bei deutlich unterschiedlichen thermischen Ausdehnungskoeffizienten der metallischen Stromschienen und der Kunststofflängsprofile keine mechanischen Verwerfungen oder Verformungen auftreten können. Es liegt ein Verbinder vor, der gleichzeitig für einen Dehnungsausgleich sorgt, so daß die sonst üblichen, in das Schleifleitungsteilstück in bestimmten Abständen einzusetzenden Dehnungsteilstücke oder Dehnungsverbinder entfallen können.

Die erfindungsgemäße Lösung besteht darin, daß die Verbindungsmuffe quer zur Längsrichtung geteilt ist und daß die beiden Verbindungsmuffenhälften als Kunststoffhälften ausgebildet uns lösbar miteinander verbindbar sind.

Erst dadurch ist es möglich, die beiden Kunststoffhälften so auszugestalten, daß sie vor dem Verbinden der Schleifleitungen auf das zugehörige Ende der Kunststofflängsprofile aufschiebbar sind. Dies bedeutet aber, daß die Schleifleitungen vorkonfektioniert, also an den Enden mit jeweils einer Kunststoffhälfte versehen werden können. Vor Ort ist dann nur noch ein sehr geringer Montageaufwand erforderlich. Der geringe Montageaufwand ergibt sich hierbei auch dadurch, daß der Monteur die beiden Kunststoffhälften im einfachsten Falle nur noch zusammenschieben muß.

Der erforderliche elektrische Berührungsschutz ist gewährleistet, wenn die an den Längskanten der Kunststoffhälften ausgebildeten Stirnflächen aneinander anliegen, da die Stromschienen auf diese Weise vollständig nach außen abgeschirmt sind .

Zweckmäßigerweise, insbesondere aus mechanischen Stabilitätsgründen, verlaufen die Längskanten der einen Kunststoffhälfte tangential zu den Längskanten der anderen Kunststoffhälfte.

Eine Verbindung der Kunststoffhälften läßt sich mit einfachen Mitteln herstellen, wenn die Kunststoffhälften zueinander komplementäre Rastelemente aufweisen, durch die die beiden Kunststoffhälften lösbar miteinander verbindbar sind.

Um eine einwandfreie Verbindung der Stromschienen im Verbindungsbereich zu gewährleisten, wird vorgeschlagen, daß jede Kunststoffhälfte im Verbindungsbereich zur Aufnahme von Stromschienenverbindem nach außen gewölbt ist.

Um zu verhindern, daß das Ende des Kunststofflängsprofils im Betriebszustand aus der Verbindungsmuffe herausziehbar ist, sind die Enden der Kunststofflängsprofile mit einem Langloch vorbestimmter Länge versehen, in die ein nach innen gerichteter, am Verbinder angeordneter Vorsprung eingreift.

Eine ausreichende Fixierung der Verbindungsmuffe läßt sich dadurch erzielen, daß beide der Kunststoffhälften am Stromschienenverbinder befestigt sind.

Vorteilhafterweise ist der Stromschienenverbinder als Anschlag für die Enden der Kunststofflängsprofile ausgebildet.

Ein stoßfreies Überfahren der Verbindungsmuffe wird dadurch ermöglicht, daß im Innern der Kunststofflängsprofile in deren Längsrichtung verlaufende Laufrollenflächen für den Stromabnehmerwagen ausgebildet sind, die in dem Endbereich der Kunststofflängsprofile mit jeweils in Längsrichtung offenen Schlitzen versehen sind, die im Einbauzustand der Verbindungsmuffe durch an die Verbindungsmuffe angeformte Laufstege mindestens teilweise ausfüllbar sind, wobei die Kunststoffprofile gegenüber den Laufstegen längsverschiebbar sind und die dem Stromabnehmerwagen zugewandten Oberseiten der Laufstege in der Ebene der Laufrollenflächen verlaufen.

Ein Ausführungsbeispiel der Erfindung ist in der Zeichnung dargestellt und wird nachfolgend näher beschrieben. Es zeigen:
- Fig. 1: eine räumliche Darstellung eines als Verbindungsmuffe ausgebildeten Verbinders für zwei aufeinanderfolgende Schleifleitungsteilstücke,
- Fig. 2: eine auf ein Ende aufgesteckte Kunststoffhälfte im Einbauzustand gemäß Fig. 1 in räumlicher Darstellung,
- Fig. 2a: ein Ende gemäß Fig. 2 mit verbundenen Stromschienen,
- Fig. 3: die Schleifleitung gemäß Fig. 2 in einer Ansicht auf das stirnseitige Ende und
- Fig. 4: ein Ende eines Kunststofflängsprofils mit eingearbeiteten Schlitzen.

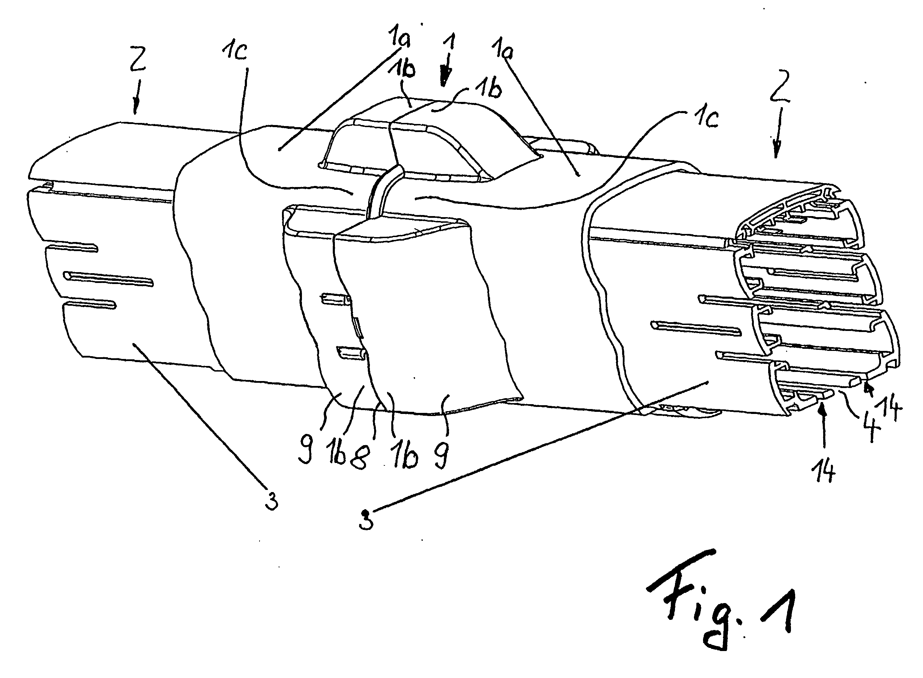

Fig. 1 zeigt eine räumliche Darstellung eines als Verbindungsmuffe 1 ausgebildeten Verbinders für zwei aufeinanderfolgende Schleifleitungsteilstücke 2 im Einbauzustand, deren Gehäuse aus zwei Kunststoffhälften 1a gebildet sind, d.h. die Verbindungsmuffe 1 ist quer zur Längsrichtung der Schleifleitungsteilstücke 2 geteilt. Hierbei liegen die an den Längskanten 1 b der Kunststoffhälften 1a ausgebildeten Stirnflächen 8 unmittelbar aneinander an und die Längskanten 1b der einen Kunststoffhälfte 1a verlaufen tangential zu den Längskanten 1b der anderen Kunststoffhälfte1a. Die Enden der Kunststofflängsprofile 3 sind in die Verbindungsmuffe 1 einsteckbar, wobei die beiden Kunststofflängsprofile 3 in der Verbindungsmuffe 1 in einem vorbestimmten Bereich in deren Längsrichtung frei verschiebbar sind. Fig. 1 läßt erkennen, daß die Verbindungsmuffe 1 die Enden der Kunststofflängsprofile 3 formschlüssig umfaßt. Die Enden der Kunststofflängsprofile 3 sind im Bereich der Verbindungsmuffe 1 zueinander fluchtend angeordnet, wobei sich jeweils gleiche Profile gegenüberstehen. Auf der unteren Seite weisen die Kunststofflängsprofile 3 und die Verbindungsmuffe 1 eine durchgehende Längsöffnung 4 in Form eines Schlitzes auf.

In den Schleifleitungsteilstücken 2 ist ein nicht gezeigter Stromabnehmerwagen in Längsrichtung verfahrbar, an dem ein Stromabnehmerkabel angeschlossen ist, welches sich im Betriebszustand durch diese Längsöffnung 4 hindurch nach außen erstreckt und mit einem externen Stromabnehmer verbindbar ist.

Jede Kunststoffhälfte 1a ist vor dem Verbinden der Schleifleitungsteilstücke 2 auf das zugehörige Ende des Kunststofflängsprofils 3 aufschiebbar.

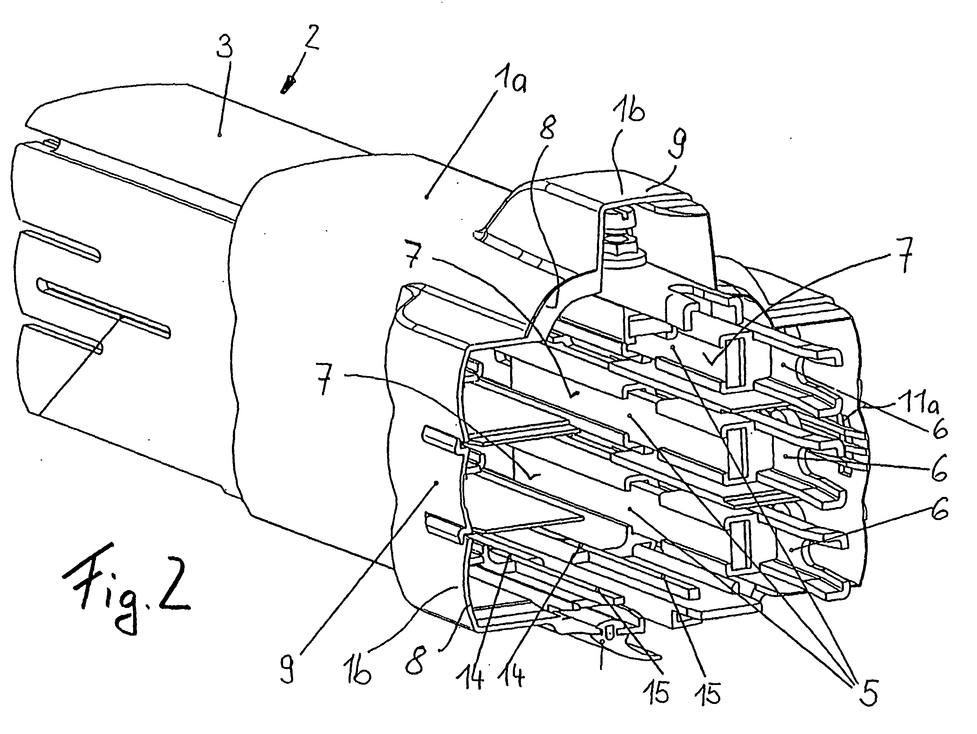

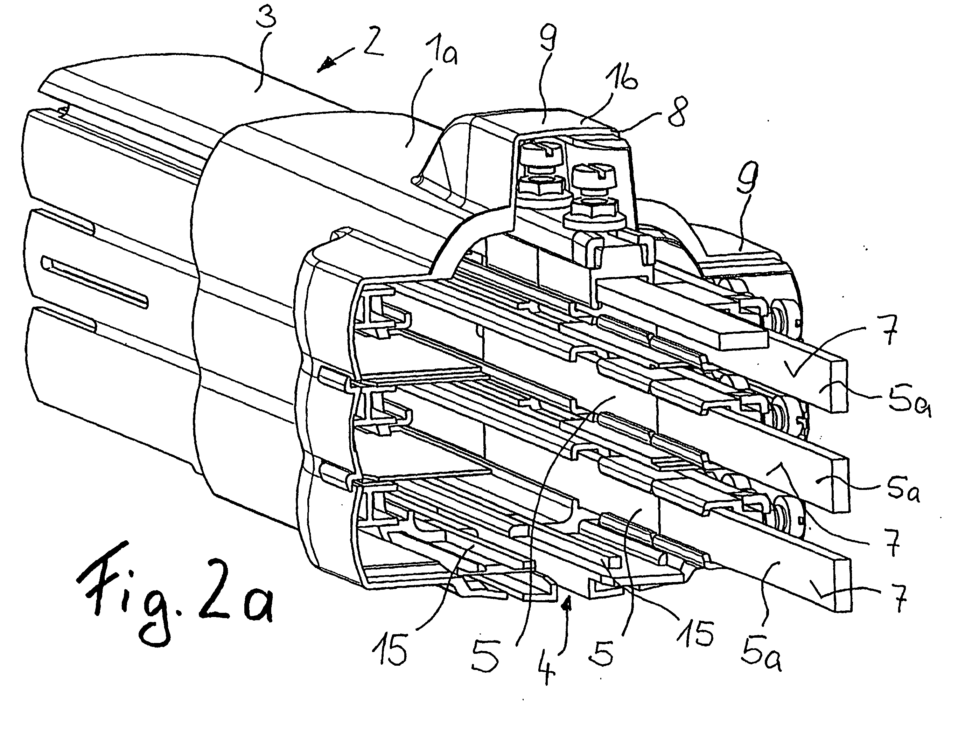

Fig. 2 zeigt eine räumliche Ansicht auf ein Ende eines Kunststofflängsprofils 3 mit aufgeschobener Kunststoffhälfte 1a, wie sie im Einbauzustand vorliegt. Zum besseren Verständnis sind in der Darstellung in Fig. 2a zusätzlich die Stromschienen 5a dem zweiten Schleifleitungsteilstückeingezeichnet. Die einen rechteckigen Querschnitt aufweisenden Stromschienen 5, 5a (auch andere Querschnitte sind möglich) sind in entsprechende Vertiefungen des Kunststofflängsprofils 3 eingesetzt und mittels dafür vorgesehene Halteelemente 6 gegen Querverschieben gesichert. Alle Stromschienen 5, 5a weisen vom Innern des Schleifleitungsteilstücks zugängliche Kontaktflächen 7 auf, auf denen Schleifstücke des Stromabnehmerwagens unterbrechungsfrei gleiten können, so daß der Stromabnehmerwagen an jeder beliebigen Stelle der Schleifleitung Strom zu einem vorgesehenen Verbraucher leiten kann.

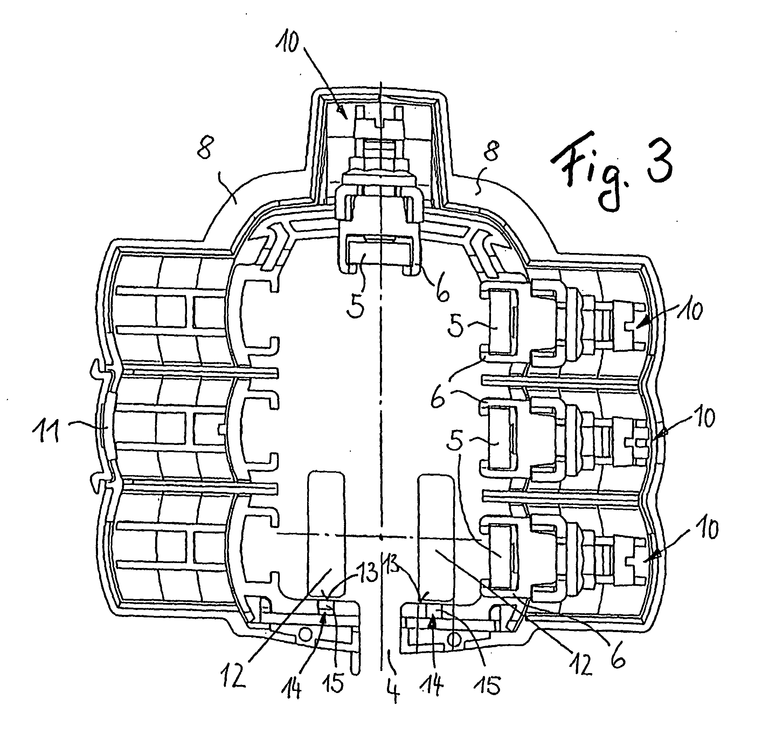

Die Figuren 2, 2a und 3 zeigen, daß jede Kunststoffhälfte 1a im Verbindungsbereich Außenwölbungen 9 zur Aufnahme von Stromschienenverbindem 10 aufweist, also nach außen gewölbt ist. Die von Stromschienenverbindem 10 fixierten Stromschienen 5, 5a liegen, wie Fig. 2 zeigt, mit ihren Stirnflächen aneinander an. Dies ist unproblematisch, da der Ausdehnungskoeffizient von Metallen, also insbesondere Kupfer, relativ gering ist. Demgegenüber haben die Längsprofile 3, die vorwiegend aus PVC gefertigt sind, einen etwa um den Faktor neun bis zwölf größeren thermischen Ausdehnungskoeffizienten.

Seitlich weisen die Kunststoffhälften 1a Rastelemente 11 (Hinterschnitt für das Rastelement 11a) auf, so daß die beiden Kunststoffhälften 1a mit einem Werkzeug lösbar miteinander verbindbar sind. Die Rastelemente 11 sind hierzu komplementär zueinander ausgebildet.

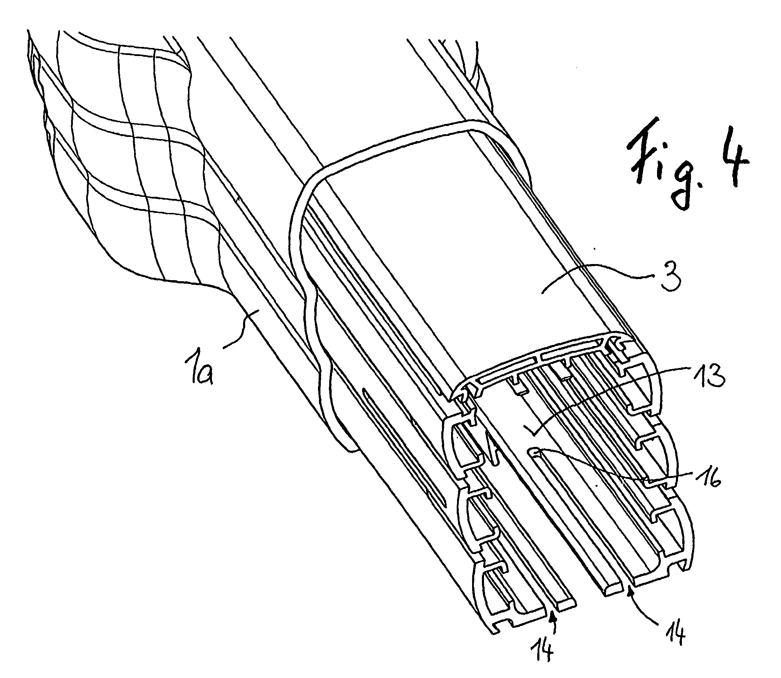

Fig. 3 zeigt das Ende des Schleifleitungsteilstücks gemäß Fig. 2 in einer Ansicht auf das stirnseitige Ende. In dieser Darstellung sind schematisch zwei Laufrollen 12 des Stromabnehmerwagens eingezeichnet, die auf in den Kunststofflängsprofilen 3 ausgebildeten Laufflächen 13 abrollen. An den Enden der Kunststofflängsprofile 3 sind in Längsrichtung offene Schlitze 14 (s. auch Fig. 4) ausgebildet, die durch an den Kunststoffhälften 1a angeformte Stege 15 in der Länge mindestens teilweise, ansonsten vollständig ausfüllbar sind. Die Laufstege 15 greifen längsverschiebbar in die Schlitze 14 ein und schließen bündig auf die Höhe der Laufrollenlauffläche 13 ab. Teilweise ausfüllbar heißt hier, daß zwischen dem Schlitzende 16 und dem Laufsteg ein Freiraum vorhanden ist, so daß die Kunststoffprofile 3 gegenüber den Stegen 15 verschiebbar sind. Die dem Stromabnehmer zugewandte Oberseite der Stege verläuft in der Ebene der Laufrollenflächen 13. Auf diese Weise wird auch bei temperaturbedingten Längenänderungen der Kunststoffprofile 3 erreicht, daß die Laufrollen 12 die Verbindungsmuffe 1 stoßfrei passieren.

Die Enden der Kunststofflängsprofile 3 sind außerdem seitlich mit einem Langloch vorbestimmter Länge versehen, in die ein nach innen gerichteter, an der Verbindungsmuffe 1 angeordneter Vorsprung (nicht gezeigt) eingreift. Auf diese Weise wird ein unbeabsichtigtes Herausziehen des jeweiligen Kunststofflängsprofils 3 aus der Verbindungsmuffe 1 verhindert, so daß die Verbindungsmuffe 1 relativ kurz ausgeführt werden kann. Im Ausführungsbeispiel dient der Stromschienenverbinder 10 gleichzeitig als innerer Anschlag für die Enden der Kunststofflängsprofile 3.

Alternativ ist es bei dem beschriebenen Verbinder selbstverständlich auch möglich, die Stromschienen 5 nach Verlegung der Kunststofflängsprofile 3 als durchgehendes Band einzuziehen, also die Bandeinzugstechnik zu verwenden.

### Bezugszeichenliste:

- 1: Verbindungsmuffe
- 1a: Kunststoffhälfte
- 1b: Längskante
- 2: Schleifleitungsteilstück
- 3: Kunststofflängsprofil
- 4: Längsöffnung
- 5: Stromschiene
- 5a: Stromschiene
- 6: Halteelement
- 7: Kontaktflächen
- 8: Stimfläche
- 9: Außenwölbung
- 10: Stromschienenverbinder
- 11: Rastelement
- 11a: Hinterschnitt für das Rastelement
- 12: Laufrolle
- 13: Lauffläche
- 14: Schlitz
- 15: Steg
- 16: Schlitzende

## Patentansprüche

1. Verbinder für zwei aufeinanderfolgende aus Kunststofflängsprofilen gebildete Schleifleitungsteilstücke, in denen Stromschienen angeordnet sind und ein Stromabnehmerwagen verfahrbar ist, und
mit einer Verbindungsmuffe, welche die in einem vorbestimmten Bereich in Längsrichtung frei verschiebbaren Enden der zueinander fluchtend angeordnet Kunststofflängsprofile formschlüssig umfaßt,
**dadurch gekennzeichnet,**
**daß** die Verbindungsmuffe (1) quer zu ihrer Längsrichtung geteilt ist und aus zwei lösbar miteinander verbindbaren Kunststoffhälften (1a) besteht, wobei jede Kunststoffhälfte (1 a) vor dem Verbinden der Schleifleitungsteilstücke (2) auf das jeweils zugehörige Ende aufschiebbar ist.

2. Verbinder nach Anspruch 1,
**dadurch gekennzeichnet,**
**daß** die an den Längskanten (1b) der Kunststoffhälften (1a) ausgebildeten Stirnflächen (8) aneinander anliegen.

3. Verbinder nach Anspruch 2,
**dadurch gekennzeichnet,**
**daß** die Längskanten (1b) der einen Kunststoffhälfte (1a) tangential zu den Längskanten (1b) der anderen Kunststoffhälfte (1a) verlaufen.

4. Verbinder nach einem der Ansprüche 2 oder 3,
**dadurch gekennzeichnet,**
**daß** die Kunststoffhälften (1a) zueinander komplementäre Rastelemente (11) aufweisen, durch die die beiden Kunststoffhälften (1a) lösbar miteinander verbindbar sind.

5. Verbinder nach einem der Ansprüche 1 bis 4,
**dadurch gekennzeichnet,**
**daß** jede Kunststoffhälfte (1a) im Verbindungsbereich zur Aufnahme von Stromschienenverbindem (10) nach außen gewölbt ist.

6. Verbinder nach einem der Ansprüche 1 bis 5,
**dadurch gekennzeichnet,**
**daß** die Enden der Kunststofflängsprofile (3) mit einem Langloch vorbestimmter Länge versehen sind, in die ein nach Innen gerichteter, an der Verbindungsmuffe (1) angeordneter Vorsprung eingreift.

7. Verbinder nach Anspruch 5,
**dadurch gekennzeichnet,**
**daß** beide Kunststoffhälften (1a) am Stromschienenverbinder (10) befestigt sind.

8. Verbinder nach einem der Ansprüche 5 oder 7,
**dadurch gekennzeichnet,**
**daß** der Stromschienenverbinder (10) als Anschlag für die Enden der Kunststofflängsprofile (3) ausgebildet ist.

9. Verbinder nach einem der Ansprüche 2 bis 8,
**dadurch gekennzeichnet,**
**daß** im Innern der Kunststofflängsprofile (3) in deren Längsrichtung verlaufende Laufrollenflächen (13) für den Stromabnehmerwagen ausgebildet sind, die in den Endbereich der Kunststofflängsprofile (3) mit jeweils in Längsrichtung offenen Schlitzen (14) versehen sind, die im Einbauzustand der Verbindungsmuffe (1) durch an der Verbindungsmuffe (1) angeformte Laufstege (15) mindestens teilweise ausfüllbar sind, wobei die Kunststoffprofile (3) gegenüber den Laufstegen (15) längsverschiebbar sind und die dem Stromabnehmerwagen zugewandten Oberseiten der Laufstege (15) in der Ebene der Laufrollenflächen (13) verlaufen.

## Claims

1. Connector for two successive current collector line segments which are formed from elongate plastics profiles and in which current conductor rails are disposed and a current collector vehicle can travel, and with a connecting sleeve which in a positive-locking manner surrounds the ends, which are freely movable within a predetermined range in the longitudinal direction, of the elongate plastics profiles which are disposed in alignment with one another, **characterised in that** the connecting sleeve (1) is divided transversely with respect to its longitudinal direction and comprises two plastics half-members (1a) which can be releasably connected to one another, wherein each plastics half-member (1a) can be pushed onto the respective associated end before the connection of the current collector line segments (2).

2. Connector as claimed in Claim 1, **characterised in that** the end faces (8) formed on the longitudinal edges (1b) of the plastics half-members (1a) abut one another.

3. Connector as claimed in Claim 2, **characterised in that** the longitudinal edges (1b) of one plastics half-member (1a) extend tangentially with respect to the longitudinal edges (1b) of the other plastics half-member (1a).

4. Connector as claimed in either Claim 2 or Claim 3, **characterised in that** the plastics half-members (1a) have locking elements (11) which are complementary to one another and by which the two plastics half-members (1a) can be releasably connected to one another.

5. Connector as claimed in any one of Claims 1 to 4, **characterised in that** each plastics half-member (1a) is curved outwards in the connection region in order to receive current conductor rail connectors (10).

6. Connector as claimed in any one of Claims I to 5, **characterised in that** the ends of the elongate plastics profiles (3) are provided with a slot of predetermined length in which an inwardly directed projection disposed on the connecting sleeve (1) engages.

7. Connector as claimed in Claim 5, **characterised in that** the two plastics half-members (1a) are fixed on the current conductor rail connector (10).

8. Connector as claimed in either Claim 5 or Claim 7, **characterised in that** the current conductor rail connector (10) is constructed as a stop for the ends of the elongate plastics profiles (3).

9. Connector as claimed in any one of Claims 2 to 8, **characterised in that** running surfaces (13) extending in the longitudinal direction of the elongate plastics profiles (3) for the current collector vehicle are constructed in the interior of the said profiles (3) and are each provided in the end region of the elongate plastics profiles (3) with slits (14) which are open in the longitudinal direction and which in the installed state of the connecting sleeve (1) can be filled at least partially by bars (15) formed on the connecting sleeve (1), wherein the plastics profiles (3) can be displaced longitudinally relative to the bars (15) and the upper faces of the bars (15) facing the current collector vehicle extend in the plane of the running surfaces (13).

## Revendications

1. Connecteur entre deux éléments de rails de contact placés l'un à la suite de l'autre et formés à partir de profilés longitudinaux en matière plastique, dans lesquels sont disposées des barres conductrices et dans lesquels un chariot conducteur est apte à se déplacer, et comprenant un manchon de raccordement qui enserre par verrouillage de forme les extrémités, librement mobiles longitudinalement dans une région prédéterminée, des profilés longitudinaux en matière plastique placés en alignement mutuel,
**caractérisé en ce que** le manchon de raccordement (1) est divisé transversalement à sa direction longitudinale et est constitué de deux moitiés en matière plastique pouvant être reliées entre elles de façon amovible, chaque moitié en matière plastique (1a) pouvant être enfilée sur l'extrémité associée avant le raccordement des éléments de rails de contact (2).

2. Connecteur selon la revendication 1, **caractérisé en ce que** les faces frontales (8), conformées au niveau des bords longitudinaux (1b) des moitiés en matière plastique, sont placées l'une contre l'autre.

3. Connecteur selon la revendication 2, **caractérisé en ce que** les bords longitudinaux (1b) de l'une des moitiés en matière plastique (1a) s'étendent tangentiellement aux bords longitudinaux (1 b) de l'autre moitié en matière plastique (1a).

4. Connecteur selon la revendication 2 ou 3, **caractérisé en ce que** les moitiés en matière plastique (1a) comportent des éléments encliquetables (11) complémentaires entre eux qui permettent de relier les deux moitiés en matière plastique (1 a) entre elles de façon amovible.

5. Connecteur selon l'une des revendications 1 à 4, **caractérisé en ce que** chaque moitié en matière plastique (1a) est bombée vers l'extérieur dans la région de liaison afin de loger les connecteurs de barre conductrice (10).

6. Connecteur selon l'une des revendications 1 à 5, **caractérisé en ce que** les extrémités des profilés longitudinaux en matière plastique (3) sont dotées d'un trou oblong de longueur prédéterminée dans lequel s'engage une saillie dirigée vers l'intérieur et placée sur le manchon de raccordement (1).

7. Connecteur selon la revendication 5, **caractérisé en ce que** les deux moitiés en matière plastique (1a) sont fixées au connecteur de barre conductrice (10).

8. Connecteur selon l'une des revendications 5 ou 7, **caractérisé en ce que** le connecteur de barre conductrice (10) est conformé en butée destinée aux extrémités des profilés longitudinaux en matière plastique (3).

9. Connecteur selon l'une des revendications 2 à 8, **caractérisé en ce que** des surfaces de roulement (13) destinées au chariot conducteur sont conformées à l'intérieur des profilés en matière plastique (3), en s'étendant dans la direction longitudinale de ceux-ci, et sont dotées dans la région d'extrémité des profilés longitudinaux en matière plastique (3) d'encoches (4), ouvertes chacune longitudinalement, dans lesquelles des nervures de roulement (15), conformées au niveau du manchon de raccordement (1), peuvent pénétrer au moins partiellement lorsque le manchon de raccordement (1) est monté, les profilés en matière plastique (3) étant mobiles longitudinalement par rapport aux nervures de roulement (15) et les faces supérieures, dirigées vers le chariot conducteur, des nervures de roulement s'étendant dans le plan des surfaces de roulement (13).
